# EUROPEAN PATENT SPECIFICATION

(11) **EP 2 127 844 B1**
(45) Date of publication and mention of the grant of the patent: **21.09.2011**
(21) Application number: 08425370.7
(22) Date of filing: 22.05.2008
(51) Int. Cl.: B29C 45/14, B29C 70/76, F16L 33/34, F16L 47/24

(54) **Rigid tubing, particularly for use in the engine compartment of a motor vehicle, and method for its manufacture**
Starre Rohrleitung, insbesondere zur Verwendung im Motorraum eines Kraftfahrzeugs, und Herstellungsverfahren dafür
Tubage rigide, en particulier pour l'utilisation dans le compartiment moteur d'un véhicule à moteur, et son procédé de fabrication

(43) Date of publication of application: 02.12.2009
(73) Proprietor: SIGIT S.p.A. - SOCIETA' ITALIANA GOMMA INDUSTRIALE TORINO S.p.A., 06016 San Giustino (Perugia) (IT); T.ERRE S.r.l., 41017 Ravarino (MO) (IT)
(72) Inventor: Decisi, Pierangelo, 10092 Beinasco (Torino) (IT); Gnes, Fabio, 10088 Volpiano (Torino) (IT); Cremonini, Maurizio, 41017 Ravarino (Modena) (IT); Polidori, Gianfranco, 20090 Cusago (Milano) (IT)
(74) Representative: Rondano, Davide

(56) References cited:
- EP-A- 0 066 704
- EP-A- 0 154 926
- EP-A- 1 701 082
- WO-A-98/00663
- DE-A1- 3 606 348
- DE-A1- 10 144 926
- DE-A1- 19 600 010
- US-A- 5 749 995

## Description

The present invention relates to a rigid tubing comprising a tube of metallic material equipped at one or both of its ends with co-moulded connecting end-pieces made of elastomeric material, particularly for use in the engine compartment of a motor vehicle, as specified in the independent claim 1.

According to a further aspect, the present invention relates to a method for the manufacture of a rigid tubing of the type identified above, as specified in the independent claim 6.

The invention was developed with specific reference to the application to breather connecting tubings for lubricating oil separators of petrol or diesel internal combustion engines. It is clear, however, that this specific application is not to be understood as in any way limiting the present invention, the latter being applicable to any other tubing intended for conducting gas and/or liquids and/or mixtures of gas and/or liquids.

It is known, in particular in the motoring field, to use rigid tubings comprising a tube of metallic material (ferrous or non-ferrous), of suitable length and extending in a straight line or a curve of suitable configuration, as well as one or two connecting end-pieces made of elastomeric material, each co-moulded at a respective end of the metallic tube and having the functions of fixing and sealing with respect to the mechanical components (rigid or non-rigid) with which the tubing has to interface. A problem with such rigid tubings known at present lies in the fact that the production of the connecting end-pieces by means of co-moulding requires the use of metallic tubes that are very strong, and therefore correspondingly heavy and/or expensive, in order to avoid deformation at the ends of the tubes themselves, due to the co-moulding of the connecting end-pieces. The co-moulding of the connecting end-pieces is in fact carried out by injection at high pressure of the elastomeric material constituting the connecting end-pieces themselves and may therefore lead, in the case of insufficiently strong metallic tubes, to unacceptable crushing of their ends.

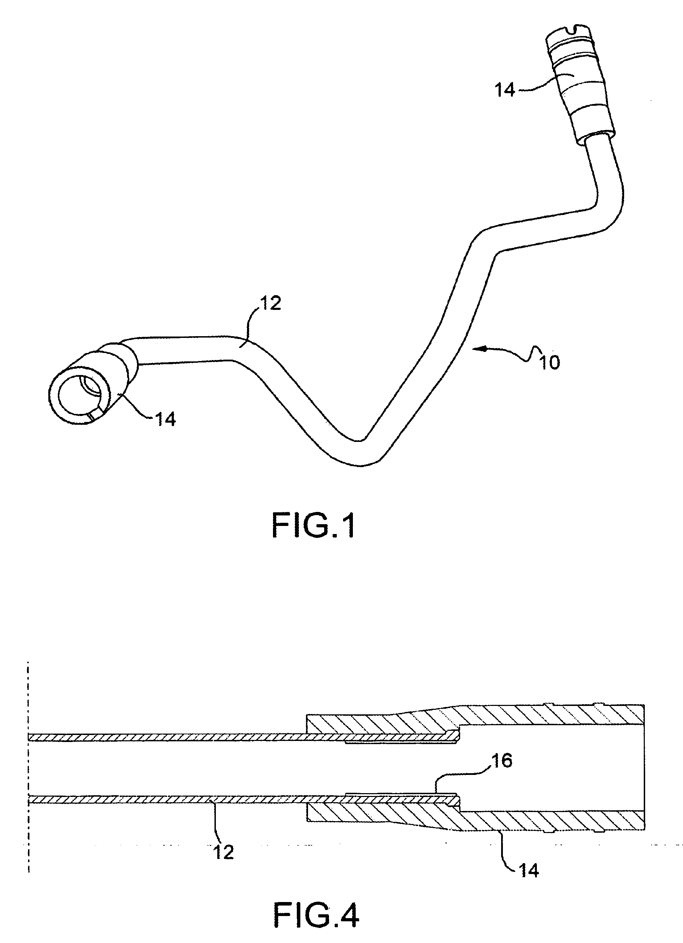

Document DE 101 44 926 A1 discloses a rigid tubing, the tubing comprising a fitting (1) of metallic material and at least one connecting end piece (2) of plastic material. A reinforcing insert (7) of metallic material is inserted into the fitting (1) at the end portion on which the connecting end-piece (2) is provided, see figure 1, for example.

It is an object of the present invention to provide a rigid tubing of the type defined above which has a minimal weight, is capable of effectively resisting even high temperature mineral oils, offers a high tensile strength (resistance to separation) at the connecting end-pieces, and can be produced at low cost by means of highly productive and flexible methods and with a low environmental impact.

These and other objects are fully achieved according to a first aspect of the invention by means of a rigid tubing having the characteristics defined in the appended independent claim 1, and according to a further aspect of the invention by means of a method for the manufacture of a rigid tubing having the characteristics defined in the appended independent claim 6.

Preferred embodiments of a rigid tubing according to the invention are the subject of dependent claims 2 to 5. Preferred ways of carrying out a method for the manufacture of a rigid tubing according to the invention are the subject of dependent claim 7.

As will become clear from the following description, by means of the insertion, into each of the ends of the metallic tube that are intended to receive a connecting end-piece, of an insert of metallic material before the operation of co-moulding of the connecting end-piece, a targeted increase in the mechanical strength of the tube is obtained, without this resulting in an increase in the weight and the cost of the tubing as a whole. The metallic tube may in fact be made of material having not very high mechanical properties and/or not increased in thickness, since it does not by itself have to provide mechanical strength in the most stressed zones during the co-moulding operation.

The characteristics and advantages of the invention will become clear from the following detailed description, provided solely by way of non-limiting example with reference to the appended drawings, in which:
Figure 1 shows a tubing according to a preferred embodiment of the present invention; and

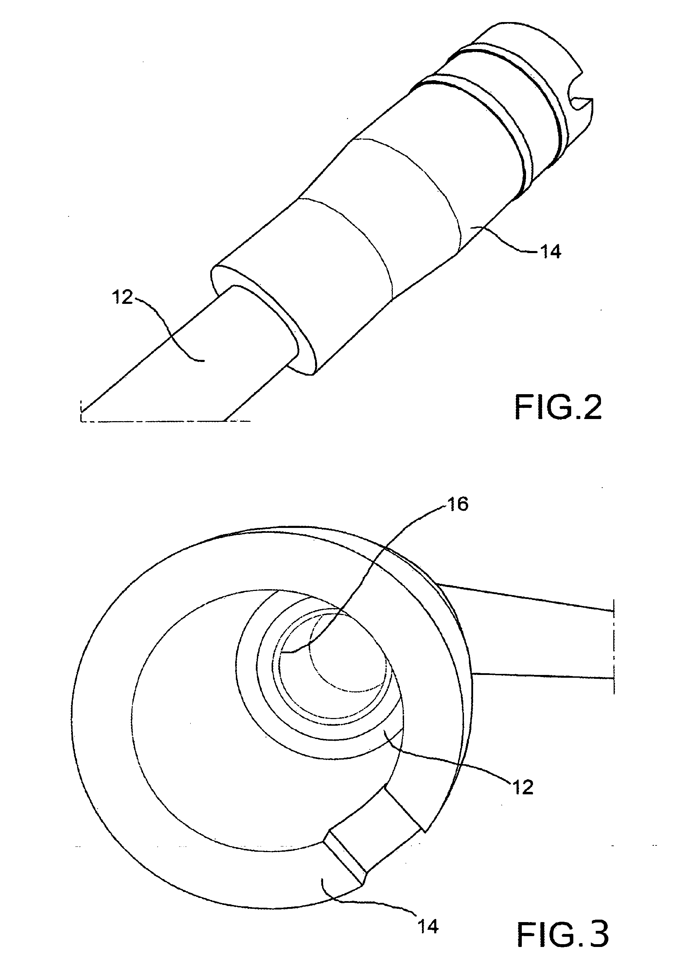

Figures 2, 3 and 4 are respectively a perspective view, a front elevation view and a view in axial section, which show in detail an end portion of the tubing of Figure 1.

With reference to the drawings, a rigid tubing according to a preferred embodiment of the present invention is generally indicated 10 and basically includes a tube 12 of metallic material and a pair of connecting end-pieces 14 of elastomeric material provided at the ends of the tube 12.

The metallic tube 12 may extend in a straight line or, as in the illustrated example, may extend partly in a curve suitably configured according to the specific applications. The size of the metallic tube 12 (length and diameter) may obviously also be selected as desired, depending on the specific applications. The metallic tube 12 may be of ferrous metallic material (for example carbon alloy steel) or of non-ferrous metallic material (for example aluminium, an aluminium alloy, brass or a brass alloy). By way of example, an aluminium alloy according to standard UNI EN AW-3103-H111 (UNI EN573.3, UNI EN 755.2) may be used. The metallic tube 12 is advantageously produced by means of hot extrusion, shaped (in the case where it does not extend in a straight line) by means of automatic cold bending, and finally cut to size by means of a suitable numerical control machine.

The connecting end-pieces 14 have the function of fixing and sealing with respect to the rigid and non-rigid mechanical components (not shown in the drawings) with which the tubing 10 is interfaced. The connecting end-pieces 14 are co-moulded on the metallic tube 12 by means of injection moulding and are advantageously constituted by a thermosetting or thermoplastic elastomer belonging to any one of the following groups (indicated in conformity with the international nomenclature):
- NR, EPDM, IIR, CR, CO/ECO,
- NBR, HNBR,
- CSM, EU, AU,
- ACM/EAM,
- FPM, FKM,
- VWQ,
- FVMQ,
- TPE.

The hardness of the material constituting the connecting end-pieces 14 is variable, depending on the applications, between 30 ShA and 50 ShD. Other types of elastomers not belonging to one of the groups listed above may obviously also be used. By way of example, the fluoroelastomer FKM 70 ShA VITON® produced by Dupont may be used. In order to ensure a high mechanical bond (resistance to separation) of the junction between the metallic tube 12 and each connecting end-piece 14, before the co-moulding of the end-piece a layer of adhesion-promoting agent, suitably selected depending on the elastomeric material constituting the connecting end-piece 14, is applied on the surface of the metallic tube 12 intended to interface with the connecting end-piece 14. The adhesion-promoting agent is applied at ambient temperature, by means of immersion, pad (or brush) or spray deposition, with a dilution percentage and a diluent that are selected depending on the product used, and is then dried at ambient temperature or at a different temperature, depending on the product used. By way of example, in the case of connecting end-pieces made of VITON® it is possible to use as the adhesion-promoting agent Chemosil® 512 produced by Henkel, diluted in MEK at 50%, applied by means of a rotary pad (or brush) and dried at ambient temperature (from +5 to +35°C) for a period of not less than 20 hours. Obviously, instead of two connecting end-pieces 14 at both the ends of the metallic tube 12, a connecting end-piece 14 may also be provided at only one of the ends of the metallic tube 12.

According to the invention, the tubing 10 further comprises a pair of inserts 16 of metallic material inserted into the metallic tube 12, each at one of the two ends that are intended to receive the connecting end-pieces 14. The inserts 16 have the function of reinforcing the metallic tube 12 at its end portions, which are the portions subjected to the highest stresses during the co-moulding of the connecting end-pieces 14. Each insert 16 is formed by a piece of metallic material (which may either be identical to or different from that used for the tube 12) of cylindrical shape, which is inserted (for example by pressure) inside the tube 12 for a length which is variable depending on the application, but is generally less than, or in any case not greater than, the length of the end portion of the metallic tube 12 on which the connecting end-piece 14 is provided. By way of example, X5CrNi1810 austenitic steel according to standard UNI EN 10088.2 may be used as the metallic material for the inserts 16.

The method for the manufacture of the rigid tubing 10 substantially comprises the following steps:
- production of the metallic tube 12 by means of hot extrusion, optional cold bending (in the case of a metallic tube not extending in a straight line) and cutting to size (preferably by means of a numerical control machine);
- insertion of the metallic reinforcing insert 16 into each of the end portions of the metallic tube 12 on which a connecting end-piece 14 is to be provided;
- deposition of the layer of adhesion-promoting agent on the surface of the metallic tube 12 which is intended to interface with the connecting end-piece(s) 14; and
- production of the connecting end-piece(s) 14 by means of injection co-moulding of elastomeric material.

The step of depositing the layer of adhesion-promoting agent may also be carried out before the insertion of the metallic insert(s).

Owing to the use of the metallic reinforcing inserts, a targeted increase in the mechanical - strength of the metallic tube is obtained, without the need to increase the cross-section of the entire tube and/or to use a metallic material having better mechanical properties. It is thus possible to achieve simultaneously the objectives of minimum weight and maximum strength of the tubing, without this involving an increase in the manufacturing costs. Moreover, the fact that the use of the inserts makes it still possible to resort to the co-moulding for the production of the connecting end-pieces, though in the presence of a metallic tube of reduced weight and mechanical strength, makes it possible to industrialize the method of manufacture of the rigid tubing and to obtain high and constant quality standards. Finally, the materials employed for the tubing need no surface treatment and are easily recyclable, thereby reducing the environmental impact of the product both in the manufacturing stage and at the end of its life.

Naturally, the principle of the invention remaining the same, the embodiments and details of construction may be widely varied with respect to those described and illustrated solely by way of non-limiting example.

## Claims

1. A rigid tubing (10), particularly for use in the engine compartment of a motor vehicle, the tubing (10) comprising a tube (12) of metallic material and at least one connecting end-piece (14) of elastomeric material co-moulded on a respective end portion of the tube (12),
the rigid tubing (10) further comprising, for each connecting end-piece (14), a reinforcing insert (16) of metallic material inserted into the tube (12) at the end portion on which the connecting end-piece (14) is provided, and a layer of adhesion-promoting agent deposited on the surface of the metallic tube (12) in contact with said at least one connecting end-piece (14).

2. Tubing according to claim 1, wherein each reinforcing insert (16) has a length not greater than that of the end portion of the metallic tube (12) on which the respective connecting end-piece (14) is provided.

3. Tubing according to claim 1 or claim 2, wherein the metallic tube (12) is made of aluminium alloy, brass alloy or another light alloy and wherein each reinforcing insert (16) is made of steel.

4. Tubing according to any one of the preceding claims, wherein said at least one connecting end-piece (14) is made of thermosetting elastomer.

5. Tubing according to any one of the preceding claims, wherein said at least one connecting end-piece (14) is made of VITON® and wherein the adhesion-promoting agent is Chemosil®.

6. A method for the manufacture of a rigid tubing (10), particularly for use in the engine compartment of a motor vehicle, the method comprising the steps of producing a tube (12) of metallic material having a given length and a given extent, and of co-moulding a respective connecting end-piece (14) of elastomeric material on at least one of the end portions of the tube (12);
the method further comprising, before the step of co-moulding the connecting end-piece(s) (14), the step of inserting, into each of the end portions of the metallic tube (12) on which a connecting end-piece (14) is to be co-moulded, a reinforcing insert (16) of metallic material, and the step of depositing a layer of adhesion-promoting agent on the surface of the metallic tube (12) which is intended to receive the connecting end-piece(s) (14).

7. A method according to claim 6, wherein the step of producing the tube (12) comprises, in succession, the operations of hot extrusion, cold bending and cutting to size of the tube (12).

## Patentansprüche

1. Biegesteife Rohrleitung (10), insbesondere zur Verwendung im Motorraum eines Kraftfahrzeugs, wobei die Rohrleitung (10) ein Rohr (12) aus metallischem Material und mindestens ein Verbindungsendstück (14) eines auf einem jeweiligen Endabschnitt des Rohrs (12) im Verbund gegossenen dehnbaren Materials aufweist, wobei die biegesteife Rohrleitung (10) für jedes Verbindungsendstück (14) ferner aufweist:
einen Verstärkungseinsatz (16) aus metallischem Material, der in das Rohr (12) an dem Endabschnitt eingebracht ist, an dem das Verbindungsendstück (14) angebracht ist, und
eine Schicht Haftvermittler, der auf der Oberfläche des metallischen Rohrs (12) aufgebracht ist, das mit dem mindestens einen Verbindungsendstück (14) in Verbindung ist.

2. Rohrleitung nach Anspruch 1, wobei jeder Verstärkungseinsatz (16) eine Länge hat, die nicht größer ist als die des Endabschnitts des metallischen Rohrs (12), auf dem das jeweilige Verbindungsendstück (14) angebracht ist.

3. Rohrleitung nach Anspruch 1 oder Anspruch 2, wobei das metallische Rohr (12) aus einer Aluminiumlegierung, Messinglegierung oder einer anderen leichten Legierung hergestellt ist, und wobei jeder Verstärkungseinsatz (16) aus Stahl hergestellt ist.

4. Rohrleitung nach einem der vorangegangenen Ansprüche, wobei das mindestens eine Verbindungsendstück (14) aus duroplastischem Elastomer hergestellt ist.

5. Rohrleitung nach einem der vorangegangenen Ansprüche, wobei das mindestens eine Verbindungsendstück (14) aus VITON® hergestellt ist, und wobei der Haftvermittler Chemosil® ist.

6. Verfahren zur Herstellung einer biegesteifen Rohrleitung (10) insbesondere zur Verwendung im Motorraum eines Kraftfahrzeugs, wobei das Verfahren die Schritte aufweist: Herstellen eines Rohrs (12) aus metallischem Material, das eine gegebene Länge und einen gegebenen Umfang hat, und im Verbund Gießen eines jeweiligen Verbindungsendstücks (14) aus dehnbarem Material an mindestens einem der Endabschnitte des Rohrs (12);
wobei ferner vor dem Schritt des im Verbund Gießens des/der Verbindungsendstücks/-e (14) der Schritt des Einsetzens eines Verstärkungseinsatzes (16) aus metallischem Material in jeden der Endabschnitte des metallischen Rohrs (12), an die ein Verbindungsendstück (14) im Verbund gegossen werden soll, und der Schritt des Aufbringens einer Schicht Haftvermittler auf die Oberfläche des metallischen Rohrs (12), das zur Aufnahme des/der Verbindungsendstücks/-e (14) bestimmt ist, erfolgt.

7. Verfahren nach Anspruch 6, wobei der Schritt des Herstellens des Rohrs (12) aufeinanderfolgend die Vorgänge der heißen Extrusion, des kalten Biegens und des auf Maß Schneidens des Rohrs (12) aufweist.

## Revendications

1. Tubulure rigide (10), notamment dévolue à l'utilisation dans le compartiment moteur d'un véhicule motorisé, ladite tubulure (10) comprenant un tuyau (12) en matériau métallique et au moins une pièce extrême de raccordement (14) en matériau élastomère, co-moulée sur une région extrême respective dudit tuyau (12), ladite tubulure rigide (10) comprenant par ailleurs, pour chaque pièce extrême de raccordement (14), une pièce intégrée de renforcement (16) en matériau métallique, insérée dans le tuyau (12) dans la région extrême sur laquelle ladite pièce extrême de raccordement (14) est prévue, et une couche d'agent promoteur d'adhérence, déposée sur la surface dudit tuyau métallique (12) en contact avec ladite pièce extrême de raccordement (14) à présence minimale.

2. Tubulure selon la revendication 1, dans laquelle chaque pièce intégrée de renforcement (16) offre une longueur n'excédant pas celle de la région extrême du tuyau métallique (12) sur laquelle la pièce extrême respective de raccordement (14) est prévue.

3. Tubulure selon la revendication 1 ou la revendication 2, dans laquelle le tuyau métallique (12) est constitué d'un alliage d'aluminium, d'un alliage de laiton ou d'un autre alliage léger ; et dans laquelle chaque pièce intégrée de renforcement (16) consiste en de l'acier.

4. Tubulure selon l'une quelconque des revendications précédentes, dans laquelle ladite pièce extrême de raccordement (14), à présence minimale, est constituée d'un élastomère thermodurcissable.

5. Tubulure selon l'une quelconque des revendications précédentes, dans laquelle ladite pièce extrême de raccordement (14), à présence minimale, est constituée de VITON ® ; et dans laquelle l'agent promoteur d'adhérence est du Chemosil ®.

6. Procédé de fabrication d'une tubulure rigide (10) dévolue, en particulier, à l'utilisation dans le compartiment moteur d'un véhicule motorisé, ledit procédé incluant les étapes de production d'un tuyau (12) en matériau métallique présentant une longueur donnée et une étendue donnée, et de co-moulage d'une pièce extrême respective de raccordement (14), en matériau élastomère, sur au moins l'une des régions extrêmes dudit tuyau (12),
ledit procédé incluant en outre, préalablement à l'étape de co-moulage de la ou des pièce(s) extrême(s) de raccordement (14), l'étape d'insertion d'une pièce intégrée de renforcement (16), en matériau métallique, dans chacune des régions extrêmes du tuyau métallique (12) sur laquelle une pièce extrême de raccordement (14) doit être co-moulée, et l'étape de dépôt d'une couche d'agent promoteur d'adhérence sur la surface dudit tuyau métallique (12) qui est destinée à recevoir ladite ou lesdites pièce(s) extrême(s) de raccordement (14).

7. Procédé selon la revendication 6, dans lequel l'étape de production du tuyau (12) comprend, en succession, les opérations d'extrusion à chaud, de cintrage à froid et de sectionnement aux cotes dudit tuyau (12).
